# EUROPEAN PATENT APPLICATION

(11) **EP 4 810 205 A1**
(43) Date of publication of application: **23.09.2026**
(21) Application number: 25164453.0
(22) Date of filing: 18.03.2025
(51) Int. Cl.: B25J 9/16

(54) **ROBOTIC GRASPING SYSTEM FOR GRASPING A ROTATIONALLY SYMMETRIC OBJECT**

(71) Applicant: Siemens Aktiengesellschaft, 80333 München (DE)
(72) Inventor: Neumann, Felix, 85386 Eching (DE); El Himer, Yassine, 81539 München (DE); Dietrich, Vincent, 80639 München (DE); Alt, Nicolas, 81673 München (DE)
(74) Representative: Siemens Patent Attorneys

(57) **Abstract**

The invention relates to a robotic grasping system (100) comprising:
- at least one sensor (101) for providing sensor data (SD) of a rotationally symmetric object (OBJ),
- a first processing unit (102) that is configured to load a predefined key-point definition for the rotationally symmetric object, wherein key-points (KP1) are either defined to lie on a rotation axis of the rotationally symmetric object or the key-points (KP2) are defined by the any one point on the rotation axis and a direction of the rotation axis of the rotationally symmetric object,
- a second processing unit (103) that is configured to detect the key-points (KP1, KP2) of the rotationally symmetric object in the sensor data (SD) and derive an object pose (OBP) thereof, and
- at least one robotic manipulator (104) that is configured to grasp the rotationally symmetric object based on the determined object pose (OBP).

## Description

The present invention relates to a robotic grasping system and a computer-implemented method for determining an object pose of a rotationally symmetric object for a robotic grasping system, as well as computer program product.

Robotic autonomous grasping systems find use for example as bin-picking robots that detect and grasp objects out of a cluttered bin or for example as mobile manipulator in industrial robotic applications. Such a typical grasping system uses a 3D key-point based posed estimator that estimates the pose of an object based on position/translation and rotation. Usually, such systems are based on artificial neural networks to conduct this task. With the key-point based pose estimators a set of known key-points is detected in sensor data, which can then be used to recover the object pose and grasp the object. Typically, a given set of recognizable key-points is determined from images and/or CAD models of the object. Then, the neural network is trained to identify this known set of 3D key-points in sensor data. Due to the known correspondence between the key-points on the reference part/CAD model and the key-points detected in sensor data, the object pose can be recovered, and the object can be grasped by a manipulator.

However, such estimators fail in the case of rotationally symmetric objects, as the typical location of the key-points for rotationally symmetric objects (e.g., based on recognizable points on the surface of the CAD model) is ambiguous and cannot be uniquely located in sensor data, such as images. Since the state-of-the-art key-point representation is ambiguous, the neural network is unable to differentiate between multiple possible solutions and converges to estimate the average of these possible solutions. This makes the recovery of the correct object pose impossible. Approaches for grasping rotationally symmetric parts address this issue in the cost/loss function used during training of the neural network. Due to the ambiguous pose of the part, the minimum cost/loss of all valid solutions can be calculated, i.e., all poses that show the same appearance in the sensor data. This is however not possible for continuously symmetric objects, since there is an infinite number of poses that lead to the same appearance. Therefore, only a discretized set of possible poses is used during training. This causes discretization errors and inaccuracies in the estimated poses by the perception system, leading to failed object grasps. An alternative approach is to always use the same rotational configuration relative to the sensor during training, which allows the network to only learn to infer this one rotational configuration using a strong bias. This however requires more specialized data labeling or data generation and the inherent bias in the estimations leads to inaccurate and potentially failed grasping operations.

It is therefore an objective of the present invention to determine for a robotic grasping system an object pose of a rotationally symmetric object in an unambiguous way.

The object is solved by the features of the independent claims. The dependent claims contain further developments of the invention.

The invention provides according to the first aspect a robotic grasping system comprising:
- at least one sensor for providing sensor data of a rotationally symmetric object,
- a first processing unit that is configured to load a predefined key-point definition for the rotationally symmetric object, wherein key-points are either defined to all lie on a rotation axis of the rotationally symmetric object or the key-points are defined by any one point on the rotation axis and a direction of the rotation axis of the rotationally symmetric object,
- a second processing unit that is configured to detect a set of key-points of the rotationally symmetric object in the sensor data and derive an object pose thereof,
   and
- a robotic manipulator that is configured to grasp the rotationally symmetric object based on the determined object pose.

It is an advantage of the present invention to provide an unambiguous key-point definition for a rotationally symmetric object such that the grasping accuracy is improved. Furthermore, the training stability of the neural network is improved when using the proposed unambiguous key-point definition.

A minimal representation through a set of key-points that lie on the rotation axis of the object or a direct parameterization and estimation of the rotation axis of the object, allows autonomous grasping systems to successfully and robustly grasp rotationally symmetric objects. Therefore, failed grasping attempts are prevented and downtime of for example a robotic production line is minimized.

According to an embodiment of the invention the key-point definition may be provided in three dimensions.

According to an embodiment of the invention the sensor data may be two-dimensional and/or three-dimensional sensor data.

According to an embodiment of the invention the second processing unit may be based on an artificial neural network, wherein the artificial neural network may be trained based on the key-point definition.

According to an embodiment the robotic grasping system may further comprise a third processing unit that is configured to determine a robot trajectory for grasping the rotationally symmetric object based on the object pose.

In other words, the rotationally invariant representation of the object pose may be further considered during the grasp planning process. This allows optimized robot trajectories and hence fewer missed grasps.

The invention provides according to the second aspect a computer-implemented method for determining an object pose of a rotationally symmetric object for a robotic grasping system, the method comprising:
- providing sensor data of the rotationally symmetric object by at least one sensor,
- loading a predefined key-point definition for the rotationally symmetric object, wherein key-points are either defined to all lie on a rotation axis of the rotationally symmetric object or the key-points are defined by any one point on the rotation axis and a direction of the rotation axis of the rotationally symmetric object,
- detecting a set of key-points of the rotationally symmetric object in the sensor data,
- deriving an object pose based on the detected key-points,
   and
- outputting the determined object pose of the rotationally symmetric object to a robotic manipulator.

In addition, a computer program product (non-transitory computer readable storage medium having instructions, which when executed by a processor, performs actions) is claimed having program instructions for performing the aforementioned method.

The invention will be explained in more detail by reference to the accompanying figures.
- Fig. 1:: shows an exemplary embodiment of the robotic grasping system; and
- Fig. 2:: shows an exemplary embodiment of the computer-implemented method for determining an object pose of a rotationally symmetric object for a robotic grasping system.

Equivalent parts in the different figures are labeled with the same reference signs.

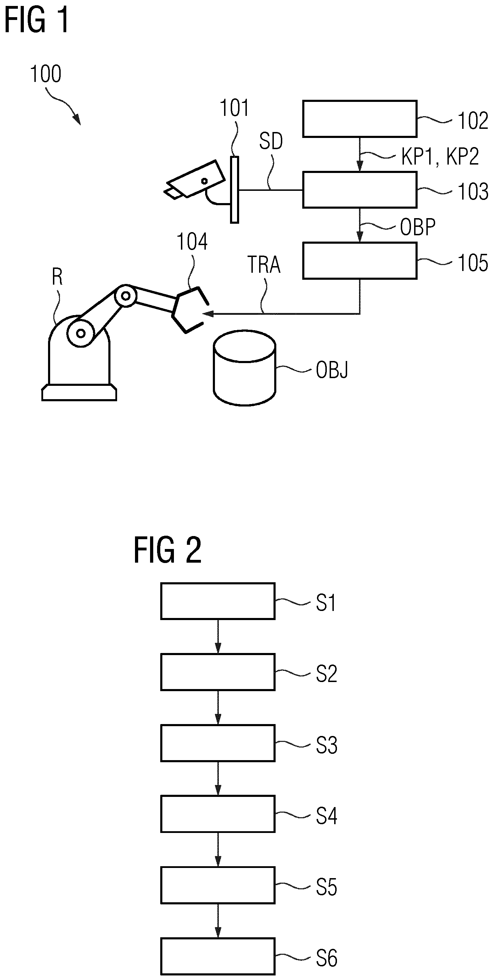

Figure 1 shows a robotic grasping system 100. The robotic grasping system 100 may be part of an industrial robot R in a production environment. The robotic grasping system 100 is configured to robustly grasp a rotationally symmetric object OBJ, for example a cylindrical object.

The robotic grasping system 100 comprises at least one sensor 101, a first processing unit 102, a second processing unit 103, and a robotic manipulator 104. Furthermore, robotic grasping system 100 may comprise a third processing unit 105. The robotic grasping system 100 may therefore comprise at least one processor. The robotic grasping system 100 is therefore configured to control the manipulator 104 to grasps objects detected in data gathered from the sensor 101. The robotic grasping system 100 may be part of a control system of the industrial robot R.

The at least one sensor 101 provides sensor data SD of the rotationally symmetric object OBJ. The sensor 101 may be understood as a perception sensor such as a camera, RGB-D camera or depth sensor. The sensor data can be 2D and/or 3D data. The sensor data SD are transmitted to the second processing unit 103.

The first processing unit 102 is configured to load a predefined key-point definition for the rotationally symmetric object and to transmit the key-point definition to the second processing unit 103. The key-point definition comprises a set of key-points, wherein the key-points KP2 are either defined to (a) lie all on a rotation axis of the rotationally symmetric object, but are preferably not constrained to the surface of the object, or (b) the key-points KP1 are defined by any one point on the rotation axis, such as the central point, and a direction of the rotation axis of the rotationally symmetric object. The key-point definition may be provided in three dimensions. Preferably, a key-point definition is specified for each type of rotationally symmetrical object that is to be gripped by the robot R.

The second processing unit 103 is configured to process the sensor data SD. The second processing unit 103 is configured to detect a set of key-points according to the respective key-point definition KP1, KP2 in the sensor data SD of the rotationally symmetric object and derive an object pose OBP thereof.

The key-point definition has two possible configurations that both allow the localization and grasping of rotationally symmetric objects without inherent errors due to discretization or learned biases by utilizing a minimal representation of the detectable degrees of freedom:
As first alternative, the key-points are defined to all lie on the symmetry axis of a rotationally symmetrical object. This definition of key-points fully constrains the observable degrees of freedom without any discretization and is sufficient to grasp the object with the robotic manipulator 104. Additional discrete symmetries (e.g., continuous and discrete symmetries of a cylindrical object) are solved using the minimal loss over all possible discrete configurations.

As second alternative, the object is identified and located by estimating a predefined point on the rotation axis, such as for example the center point, of the object and the direction of the rotation axis to fully determine all observable degrees of freedom of the object. Discrete symmetries are solved using the minimal loss over all possible discrete configurations.

The second processing unit 103 is preferably based on an artificial neural network, wherein the artificial neural network is trained based on the key-point definition and a large variety of sensor data of the object. Hence, the second processing unit 103 is configured to derive the object pose based on the key-point detection in the sensor data SD.

The derived object pose OBP is then provided to the robotic manipulator 104 that is configured to grasp the rotationally symmetric object OBJ based on the determined object pose OBP.

Optionally, the robotic grasping system 100 comprises the third processing unit 105. The third processing unit 105 is configured to determine a robot trajectory TRA for grasping the rotationally symmetric object OBJ based on the object pose OBP.

Therefore, the robotic grasping system may further be configured to plan a grasping location and/or motion based on the estimated object pose OBP and to control the robotic manipulator to execute the planned grasp.

Figure 2 shows an exemplary embodiment of the computer-implemented method for determining an object pose of a rotationally symmetric object for a robotic grasping system.

The method comprises the following method steps:
In a first step S1 sensor data, e.g., camera images, of the rotationally symmetric object by at least one sensor are collected and provided to a processing unit.

In the next step S2 a predefined key-point definition for the rotationally symmetric object is loaded, e.g., from a storage unit. The key-point definition comprises a set of key-points, wherein key-points are either defined to all lie on a rotation axis of the rotationally symmetric object, but are preferably not constrained to the surface of the object, or the key-points are defined by any one point on the rotation axis, e.g., the central point, and a direction of the rotation axis of the rotationally symmetric object.

In the next step S3 the respective key-points according to the given key-point definition are detected in the sensor data of the rotationally symmetric object.

In the next step S4 an object pose is derived based on the detected key-points.

In the next step S5 the determined object pose of the rotationally symmetric object is output and transmitted to a robotic manipulator.

In the next step S6 the robotic manipulator may be controlled to grasp the rotationally symmetric object based on the determined object pose. Optionally, the derivation of the robot trajectory may take the determined object pose into account.

All of the described and/or drawn features as shown by the embodiments can be advantageously combined within the scope of the invention.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Robotic grasping system (100) comprising:
- at least one sensor (101) for providing sensor data (SD) of a rotationally symmetric object (OBJ),
- a first processing unit (102) that is configured to load a predefined key-point definition for the rotationally symmetric object, wherein key-points (KP2) are either defined to lie all on a rotation axis of the rotationally symmetric object or the key-points (KP1) are defined by any one point on the rotation axis and a direction of the rotation axis of the rotationally symmetric object,
- a second processing unit (103) that is configured to detect a set of key-points (KP1, KP2) of the rotationally symmetric object in the sensor data (SD) and derive an object pose (OBP) thereof,
and
- a robotic manipulator (104) that is configured to grasp the rotationally symmetric object (OBJ) based on the determined object pose (OBP).

2. Robotic grasping system (100) according to claim 1, wherein the key-point definition (KP1, KP2) is provided in three dimensions.

3. Robotic grasping system (100) according to one of the preceding claims, wherein the sensor data (2D) are two-dimensional and/or three-dimensional sensor data.

4. Robotic grasping system (100) according to one of the preceding claims wherein the second processing unit (103) is based on an artificial neural network, wherein the artificial neural network is trained based on the key-point definition.

5. Robotic grasping system (100) according to one of the preceding claims further comprising a third processing unit (105) that is configured to determine a robot trajectory (TRA) for grasping the rotationally symmetric object (OBJ) based on the object pose (OBP).

6. Computer-implemented method for determining an object pose of a rotationally symmetric object for a robotic grasping system, the method comprising:
- providing (S1) sensor data of the rotationally symmetric object by at least one sensor,
- loading (S2) a predefined key-point definition for the rotationally symmetric object, wherein key-points are either defined to all lie on a rotation axis of the rotationally symmetric object or the key-points are defined by any one point on the rotation axis and a direction of the rotation axis of the rotationally symmetric object,
- detecting (S3) a set of key-points of the rotationally symmetric object in the sensor data,
- deriving (S4) an object pose based on the detected key-points,
and
- outputting (S5) the determined object pose of the rotationally symmetric object to a robotic manipulator.

7. Computer program product directly loadable into the internal memory of a digital computer, comprising software code portions for performing the method steps of claim 6 when said computer program product is run on the computer.
